# EUROPÄISCHE PATENTSCHRIFT

(11) **EP 1 946 433 B1**
(45) Veröffentlichungstag und Bekanntmachung des Hinweises auf die Patenterteilung: **25.11.2009**
(21) Anmeldenummer: 06793599.9
(22) Anmeldetag: 18.09.2006
(51) Int. Cl.: H02M 7/00, H02P 29/02, B60L 11/00

(54) **PULSWECHSELRICHTER IM NOT-GENERATORBETRIEB**
PULSE-WIDTH MODULATION RECTIFIER IN GENERATOR EMERGENCY MODE
ONDULEUR A IMPULSIONS UTILISE DANS LE FONCTIONNEMENT AU GAZOGENE D'URGENCE

(30) Priorität: 04.11.2005 DE 102005052631
(43) Veröffentlichungstag der Anmeldung: 23.07.2008
(73) Patentinhaber: ROBERT BOSCH GMBH, 70442 Stuttgart (DE)
(72) Erfinder: WINTER, Arnold, 70794 Filderstadt (DE); EISENHARDT, Martin, 71272 Renningen (DE); KAEFER, Oliver, 71711 Murr (DE)
(86) Internationale Anmeldenummer: PCT/EP2006/066460
(87) Internationale Veröffentlichungsnummer: WO 2007/051670

(56) Entgegenhaltungen:
- WO-A2-03/005551
- GB-A- 2 121 557
- US-A- 5 491 622

## Beschreibung

Die Erfindung betrifft einen Pulswechselrichter zum Betreiben einer elektrischen Maschine im Motor- oder Generatorbetrieb gemäß dem Oberbegriff des Patentanspruchs 1, eine Vorrichtung zum Wandeln mechanischer in elektrische Energie gemäß dem Oberbegriff des Patentanspruchs 5 und ein Verfahren zum Betreiben eines Pulswechselrichters in einem Hybrid-Fahrzeug gemäß dem Oberbegriff des Patentanspruchs 9.

Hybridfahrzeuge umfassen neben dem Verbrennungsmotor üblicherweise eine elektrische Maschine, die in Abhängigkeit von der Fahrsituation entweder im Motor- oder im Generatorbetrieb betrieben wird. Im Motorbetrieb erzeugt die elektrische Maschine ein zusätzliches Antriebsmoment, das den Verbrennungsmotor z.B. in einer Beschleunigungsphase unterstützt. Im Generatorbetrieb wird dagegen die bei der Verzögerung des Fahrzeugs frei werdende kinetische Energie in elektrische Energie gewandelt (Rekuperation). Die so gewonnene elektrische Energie wird in einem Energiespeicher, wie z.B. einer Batterie oder einem Super-Cap, gespeichert und kann in anderen Fahrsituationen z. B. zum Antrieb des Fahrzeugs oder zur Versorgung elektrischer Verbraucher genutzt werden. Der Wirkungsgrad des Fahrzeugs kann dadurch erheblich verbessert werden.

Bekannte Pulswechselrichter (PWR) beinhalten üblicherweise eine Leistungselektronik sowie einen Rechnerkern, der im PWR integriert ist. Der PWR wird von einem externen Steuergerät angesteuert, das in Abhängigkeit vom Fahrerwunsch (Beschleunigen bzw. Bremsen) einen Soll-Betriebspunkt für den Verbrennungsmotor und die elektrische Maschine berechnet. Der Pulswechselrichter ist mit dem Steuergerät verbunden und erhält von diesem die entsprechenden Betriebsdaten bzw. Steuerbefehle. Derartige Pulswechselrichter sind z.B. aus WO 03/005551 A2, GB 2121557 A und US 5,491,622 bekannt.

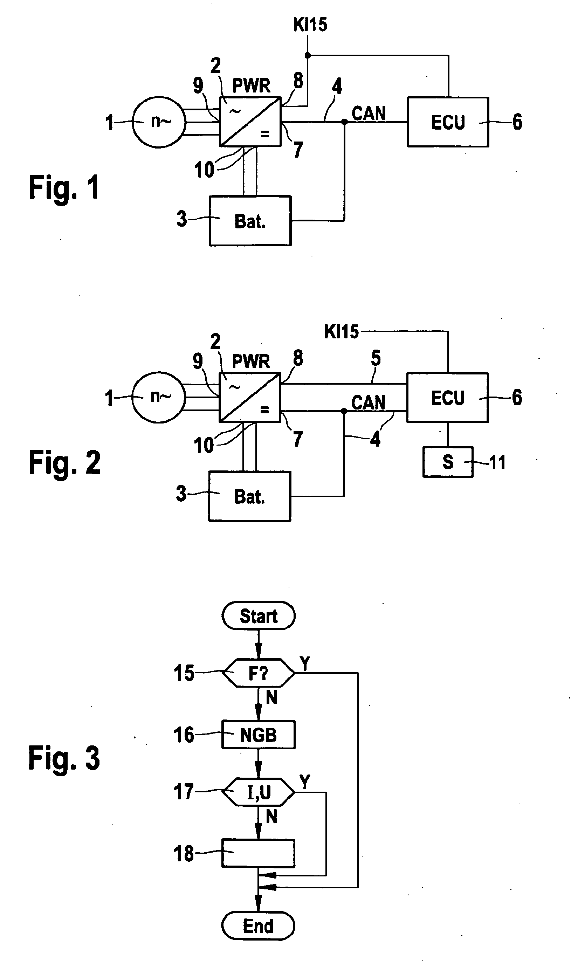

Fig. 1 zeigt einen Ausschnitt eines Bordnetzes eines Hybridfahrzeugs. Die Anordnung umfasst eine elektrische Maschine 1 mit einem Pulswechselrichter 2, der die elektrische Maschine 1 im Motor- oder Generatorbetrieb betreiben kann. Im Motorbetrieb wird der Verbrennungsmotor durch die elektrische Maschine 1 unterstützt; im Generatorbetrieb wird elektrische Energie erzeugt, die in einem Energiespeicher, hier einer Batterie 3, gespeichert wird.

Die elektrische Maschine 1 und die Batterie 3 sind über den Pulswechselrichter 2 (PWR) miteinander verbunden. Der PWR 2 bestimmt Leistung und Betriebsart der elektrischen Maschine 1 und wird von einem Steuergerät 6 entsprechend angesteuert.

Der Pulswechselrichter 2 enthält eine eigene Leistungselektronik sowie eine Recheneinrichtung und ist über einen CAN-Bus 4 mit dem externen Steuergerät 6 verbunden. Das Steuergerät 6 ermittelt den Fahrerwunsch (z.B. Bremsen bzw. Beschleunigen) und übermittelt entsprechende Informationen bzw. Steuerbefehle an den Pulswechselrichter 2. Dabei wird insbesondere auch der Ladezustand (SOC) des Energiespeichers 3 berücksichtigt, um diesen im Generatorbetrieb nicht zu überladen.

Der Pulswechselrichter 2 und das Steuergerät 6 sind an Klemme 15 angeschlossen und werden üblicherweise durch Betätigen des Zündschlosses (KL15) eingeschaltet.

Bekannte Pulswechselrichter 2 sind derart ausgelegt, dass sie bei einer Störung der Kommunikationsverbindung (CAN-Bus 4) in einen sicheren Zustand umschalten, in dem keine elektrische Energie mehr erzeugt wird. Dadurch wird verhindert, dass der Pulswechselrichter 2 den Energiespeicher 3 im Generatorbetrieb überlädt. In diesem sicheren Zustand wird jedoch überhaupt keine elektrische Energie mehr erzeugt, so dass sich der Energiespeicher 3 bei einer größeren Zahl von eingeschalteten Verbrauchern relativ schnell entleert. Das Fahrzeug kann dadurch nach relativ kurzer Zeit liegen bleiben.

Es ist daher die Aufgabe der vorliegenden Erfindung, die Energieversorgung des Bordnetzes auch bei einer Störung der Kommunikationsverbindung zwischen Pulswechselrichter und Steuergerät sicher zu stellen und gleichzeitig ein Überladen des Energiespeichers zu verhindern.

Gelöst wird diese Aufgabe gemäß der Erfindung durch die im Patentanspruch 1, 5 und 9 angegebenen Merkmale. Weitere Ausgestaltungen der Erfindung sind Gegenstand von Unteransprüchen.

Ein wesentlicher Gedanke der Erfindung besteht darin, den Pulswechselrichter derart auszulegen, dass er sich bei einem Fehler der Daten- bzw. Kommunikationsverbindung automatisch in einen Not-Generatorbetrieb schaltet, in dem der Generator eine vorgegebene elektrische Leistung erzeugt, die der PWR an seinem Gleichspannungs-Ausgang bereit stellt. Diese Leistung ist vorzugsweise derart bemessen, dass zumindest eine durchschnittliche Leistung bestimmter Dauerverbraucher, wie z.B. von Steuergeräten und Sensoren, die für die Betriebsfähigkeit des Fahrzeugs wichtig sind, abgedeckt wird. Dadurch wird erreicht, dass das Fahrzeug weiter betriebsfähig bleibt und der Fahrer zumindest eine Werkstatt aufsuchen kann.

Die im Notbetrieb erzeugte Leistung beträgt z.B. zwischen 100W bis 500W, vorzugsweise etwa 300W.

Gemäß einer bevorzugten Ausführungsform der Erfindung wird der Fahrer bei Ausfall der Kommunikationsverbindung auf diesen Fehler hingewiesen und dazu aufgefordert, eine Werkstatt aufzusuchen. Zur Information des Fahrers kann beispielsweise eine optische oder akustische Einrichtung vorgesehen sein.

Der erfindungsgemäße Pulswechselrichter hat vorzugsweise einen ersten Anschluss für einen Datenbus (CAN) zum Steuergerät und einen zweiten Anschluss für eine Steuerleitung, an der ebenfalls das Steuergerät angeschlossen werden kann. Der zweite Anschluss ist vorzugsweise ein reiner Steueranschluss (Ein/Aus), über den die elektrische Maschine aktiviert bzw. deaktiviert werden kann. Das übergeordnete Steuergerät ist somit in der Lage, den Pulswechselrichter auch bei einer Störung der Kommunikationsverbindung zu steuern und insbesondere vollständig auszuschalten. Dadurch kann verhindert werden, dass der Energiespeicher des elektrischen Bordnetzes im Not-Generatorbetrieb überladen wird.

Das Steuergerät ist vorzugsweise auch mit dem Energiespeicher verbunden und verarbeitet wenigstens eine Zustandsgröße, wie z.B. einen Strom- und/oder Spannungswert des Energiespeichers, anhand derer der Generatorbetrieb überwacht werden kann. Werden im Generatorbetrieb zu hohe Spannungen oder Ströme bzw. andere Fehler festgestellt, kann das Steuergerät den Pulswechselrichter über die zusätzliche Steuerleitung abschalten. Das Steuergerät ist vorzugsweise über eine Busverbindung mit einer Sensorik des Energiespeichers verbunden.

Der Energiespeicher umfasst vorzugsweise eine Zustandserkennung, die den Ladezustand des Energiespeichers ermittelt und dem Steuergerät bereitstellt. Die Zustandserkennung kann z. B. durch eine Recheneinrichtung mit entsprechender Software realisiert sein, die den Ladezustand z. B. über den CAN-Bus an das Steuergerät sendet. Wahlweise könnte die Zustanderkennung auch im Steuergerät integriert sein. In diesem Fall werden dem Steuergerät verschiedene elektrische Batterie-Zustandsgrößen, wie z.B. die Klemmenspannung und der Klemmenstrom, zugeführt und daraus der Batterie-Ladezustand (SOC) berechnet.

Die Erfindung wird nachstehend anhand der beigefügten Zeichnungen beispielhaft näher erläutert. Es zeigen:
Fig. 1 eine schematische Ansicht eines Bordnetzes mit einer elektrischen Maschine mit Pulswechselrichter und zugehöriger Steuerung gemäß dem Stand der Technik;
Fig. 2 eine schematische Ansicht eines Bordnetzes mit einer elektrischen Maschine mit einem Pulswechselrichter und zugehöriger Ansteuerung gemäß einer Ausführungsform der Erfindung; und
Fig. 3 die wesentlichen Verfahrensschritte einer Verfahrens zur Aufrechterhaltung der elektrischen Energieversorgung in einem Kfz-Bordnetz in Form eines Flussdiagramms.

Bezüglich der Erläuterung von Fig. 1 wird auf die Beschreibungseinleitung verwiesen.

Fig. 2 zeigt einen Ausschnitt eines elektrischen Bordnetzes eines Hybridfahrzeugs gemäß einer Ausführungsform der Erfindung. Die Anordnung umfasst eine elektrische Maschine 1 mit einem Pulswechselrichter 2 und einer zugehörigen Steuerung 6. Das Steuergerät 6 wertet den Fahrerwunsch (Beschleunigen bzw. Bremsen) aus und errechnet in Abhängigkeit davon Sollbetriebspunkte für den Verbrennungsmotor (nicht gezeigt) und die elektrische Maschine 1. Bei dem dargestellten Steuergerät 6 kann es sich z.B. um das Steuergerät des Verbrennungsmotors handeln. Diese Sollwerte werden dem Pulswechselrichter 2 (im Normalbetrieb) über einen CAN-Bus 4 zugeführt, der die elektrische Maschine 1 entsprechend entweder im Motor- oder im Generatorbetrieb betreibt. Im Motorbetrieb erzeugt die elektrische Maschine 1 ein den Verbrennungsmotor unterstützendes Antriebsmoment. Im Generatorbetrieb erzeugt der Pulswechselrichter 2 an seinem Gleichspannungs-Ausgang 10 eine vorgegebene Gleichspannung, mittels der der Energiespeicher 3 aufgeladen wird.

Der Pulswechselrichter 2 ist derart ausgelegt, dass er sich bei einer Störung der Datenübertragung über den CAN-Bus 4 automatisch in einen Not-Generatorbetrieb schaltet und in diesem Betrieb eine vorgegebene generatorische Leistung bereitstellt. Dadurch wird erreicht, dass zumindest wichtige elektrische Verbraucher, wie z.B. Steuergeräte, weiterhin versorgt werden und das Fahrzeug weiter betriebsfähig bleibt. Bei einer Störung der Datenübertragung wird der Fahrer auf den Fehler hingewiesen und dazu aufgefordert, eine Werkstatt aufzusuchen. Hierzu ist eine optische oder akustische Anzeigeeinrichtung 11 vorgesehen, die mit dem Steuergerät 6 verbunden ist und von diesem aktiviert wird.

Das Steuergerät 6 ist ferner mit dem Energiespeicher 3 verbunden und erhält wenigstens eine elektrische Größe, wie z.B. einen Strom- oder Spannungswert, anhand derer sich der Notbetrieb überwachen lässt. Bei einem zu starken Anstieg der Netzspannung oder des Ladestroms besteht somit die Möglichkeit, den Notbetrieb zu deaktivieren. Das Steuergerät ist hierzu über eine separate Steuerleitung 5 mit dem Pulswechselrichter 2 verbunden. Bei Gefahr der Überladung des Energiespeichers 3 kann das Steuergerät 6 den Pulswechselrichter 2 mittels eines Signals "low" bzw. "high" aus- bzw. einschalten.

Im dargestellten Beispiel ist im Unterschied zu Fig. 1 nur das Steuergerät 6 mit dem Zündschloss (KL15) verbunden, nicht jedoch der PWR 2. Der Pulswechselrichter 2 wird über die Steuerleitung 5 eingeschaltet.

Fig. 3 zeigt die wesentlichen Verfahrensschritte eines Verfahrens zum Aufrechterhalten der Energieversorgung bei einem Fehler im Kommunikationssystem 4 zwischen Pulswechselrichter 2 und Steuergerät 6. Dabei wird in einem Schritt 15 zunächst überprüft, ob die Datenverbindung 4 zwischen PWR 2 und Steuergerät 6 funktioniert (indem z. B. eine Anfrage auf Bestätigung gesendet wird). Bei ordnungsgemäßer Funktion (J) endet das Verfahren. Liegt dagegen ein Fehler vor (N) geht der Pulswechselrichter 2 in den Not-Generatorbetrieb (Schritt 16) über. Dies erfolgt automatisch, wenn der Pulswechselrichter 2 eine Fehlfunktion der Datenübertragung erkennt. Der Not-Generatorbetrieb wird mittels einer Warnleuchte 11 im Armaturenbrett oder mittels einer anderen Einrichtung angezeigt.

In Schritt 17 überwacht die Fahrzeugsteuerung 6 den Ladevorgang des Energiespeichers 3, wobei der Ladestrom und/oder die Ladespannung erfasst und verarbeitet wird. Wenn der Not-Generatorbetrieb ordnungsgemäß funktioniert, endet das Verfahren. Werden dagegen zu hohe Ströme oder Spannungen festgestellt (N), so kann das Steuergerät 6 den Pulswechselrichter 2 über die zusätzliche Steuerleitung 5 abschalten. Hierzu erzeugt das Steuergerät 6 z. B. ein Signal "low" am entsprechenden Ausgang.

## Patentansprüche

1. Pulswechselrichter zum Betreiben einer elektrischen Maschine (1) im Motor- oder Generatorbetrieb, der einen Anschluss (7) für eine Datenverbindung (4) mit einem Steuergerät (6) aufweist, wobei der Pulswechselrichter (2) derart ausgebildet ist, dass er sich automatisch in einen Notbetrieb schaltet, wenn eine Störung der Datenverbindung (4) vorliegt, **dadurch gekennzeichnet, dass** der Pulswechselrichter (2) derart ausgebildet ist, daß er bei Störung der Datenverbindung (4) an seinem Gleichspannungs-Ausgang (10) eine vorgegebene Leistung bereit stellt, mit der zumindest ein Notbetrieb elektrischer Verbraucher aufrecht erhalten werden kann.

2. Pulswechselrichter nach Anspruch 1, **dadurch gekennzeichnet, dass** die im Notbetrieb erzeugte Leistung zwischen 100W und 500W beträgt.

3. Pulswechselrichter nach Anspruch 1, **dadurch gekennzeichnet, dass** der Pulswechselrichter (2) einen zusätzlichen Anschluss (8) für das Steuergerät (6) aufweist, über den der Pulswechselrichter (2) vom Steuergerät (6) bei Bedarf deaktiviert werden kann.

4. Pulswechselrichter nach Anspruch 1oder 2, **dadurch gekennzeichnet, dass** der Pulswechselrichter (2) einen ersten Anschluss (7) für einen Bus (4) und einen zweiten Anschluss (8) für eine Steuerleitung (5) aufweist, an denen das Steuergerät (6) angeschlossen wird.

5. Vorrichtung zum Erzeugen elektrischer Energie in einem Kfz-Bordnetz, umfassend eine elektrische Maschine (1) mit einem Pulswechselrichter (2), der zwischen die elektrische Maschine (1) und ein Gleichspannungs-Bordnetz geschaltet wird und der außerdem über eine Datenverbindung (4) mit einem Steuergerät (6) verbunden werden kann, **dadurch gekennzeichnet, dass** der Pulswechselrichter (2) derart ausgebildet ist, dass er sich bei einer Störung der Datenverbindung (4) automatisch in einen Notbetrieb schaltet, in dem er an seinem Gleichspannungs-Ausgang (10) eine vorgegebene Leistung bereit stellt, mit der zumindest ein Notbetrieb elektrischer Verbraucher aufrecht erhalten werden kann.

6. Vorrichtung nach Anspruch 5, **dadurch gekennzeichnet, dass** der Pulswechselrichter (2) einen zusätzlichen Anschluss (8) für das Steuergerät (6) aufweist, über den der Pulswechselrichter (2) vom Steuergerät (6) bei Bedarf deaktiviert werden kann.

7. Vorrichtung nach Anspruch 5 oder 6, **dadurch gekennzeichnet, dass** das Steuergerät (6) eine Batterie-Zustandserkennung aufweist.

8. Vorrichtung nach einem der Ansprüche 5 bis 7, **dadurch gekennzeichnet, dass** das Steuergerät (6) wenigstens eine elektrische Größe (U,I) des Energiespeichers (3) überwacht und in Abhängigkeit davon den Pulswechselrichter (2) steuert.

9. Verfahren zur Verbesserung der Energieversorgung in einem Hybrid-Fahrzeug, das einen Verbrennungsmotor und eine elektrische Maschine (1) aufweist, die wahlweise im Motor- oder Generatorbetrieb betrieben werden kann, wobei die elektrische Maschine (1) von einem Pulswechselrichter (2) gesteuert wird, der mit einem Steuergerät (6) über eine Datenverbindung (4) in Verbindung steht, **dadurch gekennzeichnet, dass** die Funktion der Datenverbindung (4) überwacht und der Pulswechselrichter (2) im Falle einer Störung in einen sicheren Notbetrieb geschaltet wird, in dem er an seinem Gleichspannungs-Ausgang (10) eine vorgegebene Leistung erzeugt, mit der zumindest ein Notbetrieb elektrischer Verbraucher aufrecht erhalten werden kann.

10. Verfahren nach Anspruch 9, **dadurch gekennzeichnet, dass** das Steuergerät (6) wenigstens eine elektrische Größe (U,I) eines Energiespeichers (3) im Notbetrieb überwacht, und in Abhängigkeit davon den Pulswechselrichter (2) deaktiviert oder nicht.

## Claims

1. Pulse-controlled inverter for operating an electrical machine (1) in the motor or generator mode, which pulse-controlled inverter has a connection (7) for a data connection (4) to a controller (6), with the pulse-controlled inverter (2) being designed in such a way that it automatically switches to an emergency mode when there is a fault in the data connection (4), **characterized in that** the pulse-controlled inverter (2) is designed in such a way that, when there is a fault in the data connection (4), a predefined power is provided at the DC voltage output (10) of the said pulse-controlled inverter, it being possible for at least an emergency mode of electrical loads to be maintained by way of the said predefined power.

2. Pulse-controlled inverter according to Claim 1, **characterized in that** the power generated in the emergency mode is between 100 W and 500 W.

3. Pulse-controlled inverter according to Claim 1, **characterized in that** the pulse-controlled inverter (2) has an additional connection (8) for the controller (6), it being possible for the pulse-controlled inverter (2) to be deactivated by the controller (6) by means of the said additional connection as required.

4. Pulse-controlled inverter according to Claim 1 or 2, **characterized in that** the pulse-controlled inverter (2) has a first connection (7) for a bus (4) and a second connection (8) for a control line (5) to which the controller (6) is connected.

5. Apparatus for generating electrical energy in an on-board motor vehicle electrical system, comprising an electrical machine (1) with a pulse-controlled inverter (2) which is connected between the electrical machine (1) and an on-board DC voltage electrical system and which also can be connected to a controller (6) via a data connection (4), **characterized in that** the pulse-controlled inverter (2) is designed in such a way that it automatically switches to an emergency mode when there is a fault in the data connection (4), in which emergency mode the said pulse-controlled inverter provides a predefined power at its DC voltage output (10), it being possible for at least an emergency mode of electrical loads to be maintained by way of the said predefined power.

6. Apparatus according to Claim 5, **characterized in that** the pulse-controlled inverter (2) has an additional connection (8) for the controller (6), it being possible for the pulse-controlled inverter (2) to be deactivated by the controller (6) by means of the said additional connection as required.

7. Apparatus according to Claim 5 or 6, **characterized in that** the controller (6) has a battery state identification means.

8. Apparatus according to one of Claims 5 to 7, **characterized in that** the controller (6) monitors at least one electrical variable (U, I) of the energy storage means (3) and controls the pulse-controlled inverter (2) as a function of this monitoring process.

9. Method for improving the energy supply in a hybrid vehicle which has an internal combustion engine and an electrical machine (1) which can selectively be operated in the motor or generator mode, with the electrical machine (1) being controlled by a pulse-controlled inverter (2) which is connected to a controller (6) by means of a data connection (4), **characterized in that** the function of the data connection (4) is monitored and the pulse-controlled inverter (2) is switched to a reliable emergency mode in the event of a fault, in which emergency mode the said pulse-controlled inverter generates a predefined power at its DC voltage output (10), it being possible for at least an emergency mode of electrical loads to be maintained by way of the said predefined power.

10. Method according to Claim 9, **characterized in that** the controller (6) monitors at least one electrical variable (U, I) of an energy storage means (3) in the emergency mode, and the pulse-controlled inverter (2) is deactivated or not as a function of this monitoring process.

## Revendications

1. Onduleur impulsionnel pour faire fonctionner une machine électrique (1) en mode moteur ou générateur, lequel présente une borne (7) pour une liaison de données (4) avec un module de commande (6), l'onduleur impulsionnel (2) étant configuré de telle sorte qu'il commute automatiquement en un mode de secours lorsqu'il existe un défaut de la liaison de données (4), **caractérisé en ce que** l'onduleur impulsionnel (2) est configuré de telle sorte qu'en cas de défaut dans la liaison de données (4), il délivre à sa sortie de tension continue (10) une puissance prédéfinie avec laquelle il est possible de maintenir au moins un fonctionnement de secours des charges électriques.

2. Onduleur impulsionnel selon la revendication 1, **caractérisé en ce que** la puissance générée en mode de secours est comprise entre 100 W et 500 W.

3. Onduleur impulsionnel selon la revendication 1, **caractérisé en ce que** l'onduleur impulsionnel (2) présente une borne supplémentaire (8) pour le module de commande (6), par le biais de laquelle l'onduleur impulsionnel (2) peut être désactivé en cas de besoin par le module de commande (6).

4. Onduleur impulsionnel selon la revendication 1 ou 2, **caractérisé en ce que** l'onduleur impulsionnel (2) présente une première borne (7) pour un bus (4) et une deuxième borne (8) pour une ligne de commande (5) à laquelle est raccordé le module de commande (6).

5. Dispositif pour générer de l'énergie électrique dans un réseau de bord de véhicule automobile, comprenant une machine électrique (1) munie d'un onduleur impulsionnel (2) qui est connecté entre la machine électrique (1) et un réseau de bord de tension continue et qui peut en plus être relié avec un module de commande (6) par le biais d'une liaison de données (4), **caractérisé en ce que** l'onduleur impulsionnel (2) est configuré de telle sorte qu'en cas de défaut de la liaison de données (4), il commute automatiquement en un mode de secours dans lequel il délivre à sa sortie de tension continue (10) une puissance prédéfinie avec laquelle il est possible de maintenir au moins un fonctionnement de secours des charges électriques.

6. Dispositif selon la revendication 5, **caractérisé en ce que** l'onduleur impulsionnel (2) présente une borne supplémentaire (8) pour le module de commande (6), par le biais de laquelle l'onduleur impulsionnel (2) peut être désactivé en cas de besoin par le module de commande (6).

7. Dispositif selon la revendication 5 ou 6, **caractérisé en ce que** le module de commande (6) présente une détection de l'état d'une batterie.

8. Dispositif selon l'une des revendications 5 à 7, **caractérisé en ce que** le module de commande (6) surveille au moins une grandeur électrique (U, I) de l'accumulateur d'énergie (3) et commande l'onduleur impulsionnel (2) en fonction de celle-ci.

9. Procédé pour améliorer l'alimentation en énergie dans un véhicule hybride qui présente un moteur à combustion et une machine électrique (1), laquelle peut fonctionner au choix en mode moteur ou en mode générateur, la machine électrique (1) étant commandée par un onduleur impulsionnel (2) qui est relié avec un module de commande (6) par le biais d'une liaison de données (4), **caractérisé en ce que** la fonction de la liaison de données (4) est surveillée et l'onduleur impulsionnel (2), en cas de défaut, est commuté dans un mode de secours sécurisé dans lequel il délivre à sa sortie de tension continue (10) une puissance prédéfinie avec laquelle il est possible de maintenir au moins un fonctionnement de secours des charges électriques.

10. Procédé selon la revendication 9, **caractérisé en ce que** le module de commande (6) surveille au moins une grandeur électrique (U, I) d'un accumulateur d'énergie (3) en mode de secours et désactive ou non l'onduleur impulsionnel (2) en fonction de celle-ci.
